# EUROPEAN PATENT SPECIFICATION

(11) **EP 0 575 121 B1**
(45) Date of publication and mention of the grant of the patent: **17.03.1999**
(21) Application number: 93304577.5
(22) Date of filing: 11.06.1993
(51) Int. Cl.: A23C 7/04, A23J 3/16

(54) **Treatment of food products**
Behandlung von Nahrungsmittelprodukten
Traitement de produits alimentaires

(30) Priority: 16.06.1992 GB 9212718
(43) Date of publication of application: 22.12.1993
(73) Proprietor: ROHM AND HAAS COMPANY, Philadelphia Pennsylvania 19105 (US)
(72) Inventor: Agmon, Gilad, Ramat-Hasharon 47283 (IL); Carlyle, Robert Morton, F-78450 Chavenay (FR); Zaganiaris, Emmanuael, F-02300 Chauny (FR)
(74) Representative: Tanner, James Percival

(56) References cited:
- EP-A- 0 080 298
- EP-A- 0 092 443
- US-A- 4 276 179
- PATENT ABSTRACTS OF JAPAN vol. 007, no. 235 (C-191)19 October 1983
- DATABASE WPI Week 9210, Derwent Publications Ltd., London, GB; AN 92-075411
- PATENT ABSTRACTS OF JAPAN vol. 012, no. 037 (C-473)4 February 1988
- DATABASE WPI Week 8507, Derwent Publications Ltd., London, GB; AN 85-040577
- PATENT ABSTRACTS OF JAPAN vol. 012, no. 275 (C-516)29 July 1988
- PATENT ABSTRACTS OF JAPAN vol. 006, no. 202 (C-129)13 October 1982
- DATABASE WPI Week 7342, Derwent Publications Ltd., London, GB; AN 73-63570U
- DATABASE WPI Week 8444, Derwent Publications Ltd., London, GB; AN 84-273707

## Description

The present invention is concerned with the treatment of food products. More particularly, the present invention is concerned with the treatment of food products selected from dairy products and soya milk to remove therefrom off-colours, off-flavours, off-smells and/or undesirable contaminants.

JP 58126748 discloses the treatment of soya milk, to remove the oderous and colouring components of the soya milk, by passing the soya milk through a column containing a synthetic adsorption resin.

JP 63052853 discloses the treatment of soybean milk with Duolite resin to remove the soybean glycoside components until the unpleasant taste is eliminated.

JP 57110166 discloses the treatment of pasteurised soy sauce with adsorbent, consisting of glass beads or synthetic resin, to remove heat denaturing proteins in the soy sauce.

Food products are often subjected to stabilisation or sterilisation procedures during their processing. Such stabilisation or sterilisation procedures may, for example, involve subjecting the food products to elevated temperatures, high pressures, UV light, ultrasonics or x-rays. These stabilisation or sterilisation techniques may lead to the production of off-flavours, off-colours and/or off-smells in the food products.

For example, dairy products, e.g. milk and products made therefrom, are often subjected to treatment, prior to storage and transportation, to stabilise such products against microbiological actions and enzyme activities (known as enzyme inactivation or stabilization). This stabilisation is normally achieved by a heat treatment process such as pasteurisation, sterilisation or UHT (Ultra Heat Treatment - sometimes known as Ultra High Temperature). However, such heat treatment processes often result in the formation of off-flavours (off tastes), off-colours and/or off-smells in the dairy products which inhibit their acceptability by the end consumer. In this connection, as dairy products generally have subtle flavours and odours, the presence of off-flavours and off-smells in such dairy products becomes especially noticeable to the consumer. Similarly, dairy products generally have a light colour and this makes the presence of off-colours in such products especially noticeable to the consumer.

Off-flavours, off-colours and/or off-smells in food products, for example dairy products, can also occur due to oxidation and microbiological spoilage of the food product. Further, in the case of dairy products, off-flavours, off-colours and/or off-smells can occur due to the use of enzymes (e.g. hydrolysation of milk and milk products). Food products can also contain natural off-flavours, off-colours and/or off-smells, i.e. originating from the food products themselves. For example, in the case of milk products, off-smells can originate from the source of the milk, i.e. the cow, goat or sheep itself.

Clearly, it would be desirable if the off-flavours (off tastes), off-colours and/or off-smells often associated with food products such as dairy products, for example off-flavours, off-colours and/or off-smells resulting from heat treatment processes or other stabilisation/sterilisation steps, could be removed from, or at least minimised in, such products.

We have now found a process for the treatment of food products selected from dairy products and soya milk that have been subjected to a heat treatment step or other stabilisation/sterilization step, which enables off-colours, off-flavours (off-tastes) and/or off-smells generated during such processing of the food products to be removed, or at least minimised. The process also enables undesirable contaminants, for example residues of agricultural chemicals used in farming practises, e.g. pesticides, herbicides, fertilisers or veterinary preparations such as antibiotics and hormones, to be removed from, or at least minimised in, the food products. The process further enables the cloud stability of the food products to be improved.

According to the present invention there is provided a process for treating a food product which comprises contacting a food product selected from dairy products and soya milk, which has been subjected to treatment to stabilise the product and which has developed off-flavours, off-colours and/or off-smells as a result of said treatment to stabilise the product, with a poymeric adsorbent resin to remove the off-flavours, off-colours and/or off-smells.

The present invention also provides the use of adsorbent resin in the treatment of a food product selected from dairy products and soya milk to remove off-flavours, off-colours and/or off-smells which have developed as a result of the treatment of the food product to stabilise the food product.

In one embodiment of the present invention the dairy products are milk products.

The food products to be treated in accordance with the present invention may, for example, be in the form of liquid products, concentrated products or powdered products. Further, the food products may, for example, be in the form of blends, mixtures or reconstituted products. In one embodiment of the present invention, the food products may be split up into different phases before treatment in accordance with the present invention, one or more of the phases may then be subjected to treatment in accordance with the present invention, and the separate phases may then be reconstituted, i.e. the reconstituted product is formed after treatment in accordance with the present invention. An example of this is milk which may be separated into skimmed milk, cream, etc.; one or more of the separate phases may then be subjected to treatment in accordance with the present invention, and the separate phases may then be reconstituted after treatment. Of course, it is also possible for the reconstituted product to be formed before treatment in accordance with the present invention in which case the reconstituted product is subjected to treatment with the adsorbent resin.

If necessary, the food product can be diluted with an appropriate diluent prior to its treatment in accordance with the present invention. For example, if necessary, the food product can be diluted with an appropriate diluent in order that it should be in a fluid form suitable for treatment with the adsorbent resin, for example, in order for it to have a viscosity sufficient to enable it to be treated with the adsorbent resin. For example, if the food product is in the form of a powder, it will be necessary to use a diluent in order for it to be in a form suitable for treatment with the adsorbent resin. If the food product is in the form of a concentrate, then it may be advisable or necessary to use a diluent, for example, so that it has a viscosity sufficient for it to be treated with the adsorbent resin. The diluent may, for example, be a solvent or suspending agent for the food product, and a preferred diluent is water.

Examples of suitable dairy products include milk and products derived therefrom. The milk may, for example, be cow's milk, sheep's milk, goat's milk, camel's milk or mare's milk. Further, the milk may, for example, be in the form of whole milk, partially skimmed milk, or fully skimmed milk. Examples of products derived from milk include whey, cream, hydrolysates, cheese and cheeselike products, yoghurt, tofu, koumiss, kefir and tätte. Products derived from dairy products may, for example, be in the form of blends, mixtures and reconstituted products.

The soya milk, which may be treated in accordance with the process of the present invention, has a milk-like appearance and may be used as a milk substitute.

The process of the present invention is used to treat the food products which have been subjected to a heat treatment process or other stabilisation process such as high pressure stabilisation, or stabilisation using UV light, ultrasonics or x-rays. In the case of dairy products, this heat treatment process may, for example, be pasteurisation, sterilisation or UHT.

It has been found that the use, in accordance with the present invention, of an adsorbent resin can remove, from the food products treated, trace impurities which give rise to the off-flavours (off-tastes), off-colours and/or off-smells, for example the off-flavours (off-tastes), off-colours and/or off-smells often present after heat treatment or other stabilisation processes. Also, it has been found that the use of the adsorbent resin does not adversely affect the nutritional value or the ionic composition of the food products. For example, it has surprisingly been found that, although milk and soya milk are complex colloidal suspensions of proteins such products can be treated in accordance with the present invention without resulting in denaturing of the proteins or destruction of the colloidal suspension.

As the adsorbent resins are to be used, in accordance with the process of the present invention, for treating food products, it is important that they be of a quality suitable for use in food treatment, and it is also important that they be approved where necessary, by the relevant authorities for such use. Also, the adsorbent resins should be physically and chemically stable to the operating conditions normally experienced in the food industry, for example the dairy industry.

Adsorbent resins, which are used in the process of the present invention have the advantage that they can be readily sterilised by chemical or physical means, for example, by the use of a high temperature, a feature which is very desirable in a material which is to be contactable with food products.

The adsorbent resins suitable for use in the present invention may, for example have ion exchange functionality. However, it is preferred that the adsorbent resins have no, or only limited, ion exchange functionaltiy.

Adsorbent resins suitable for use in the process of the present invention are typically macroporous resins, for example, macroporous resins having an average surface area of about 100 m²/g or greater, preferably about 250 m²/g or greater. The adsorbent resins may be polymeric adsorbents and carbonaceous adsorbents, and are preferably polymeric adsorbents. Suitable polymeric adsorbents include those based on crosslinked polymers formed from monomers comprising aromatic monomers, aliphatic monomers or mixtures thereof. Suitable aromatic monomers include phenol, styrene, and alkyl-substituted styrenes such as α-methylstyrene, ethylvinylbenzene, p-methylstyrene and vinylxylene, and suitable aliphatic monomers include acrylic esters, methacrylic esters and acrylonitrile. Preferably, the polymers are crosslinked with polyethylenically unsaturated monomers, for example: aromatic crosslinkers such as divinylbenzene, divinyltoluene, trivinylbenzene, divinylchlorobenzene, diallylphthalate, divinylnaphthalene, divinylxylene, divinylethylbenzene, trivinylnaphthalene and polyvinylanthracenes; aliphatic crosslinkers having a plurality of non-conjugated vinyl groups such as di- and polyacrylates and methacrylates, e.g. trimethylolpropane trimethacrylate, ethylene glycol dimethacrylate, ethylene glycol diacrylate, neopentyl glycol dimethacrylate, pentaerythritol tetra- and trimethacrylates and allyl acrylate; divinylaliphatic crosslinking monomers such as divinyl ketone and diethylene glycol divinyl ether; diacrylamides and dimethacrylamides such as N',N'-methylenediacrylamide, N',N'-methylenedimethacrylamide, and N',N'-ethylenediacrylamide; polyallyl aliphatic crosslinkers such as diallyl maleate, diallyl fumarate, diallyl succinate, diallyl carbonate, diallyl malonate, diallyl oxylate, diallyl adipate, diallyl sebacate, diallyl tartrate, diallyl tricarballylate, triallyl aconitate, and triallyl citrate; and the polyallyl and polyvinyl ethers of glycol, glycerol and pentaerythritol. Preferably, the adsorbent resin is formed from monomers comprising divinylbenzene and optionally other aromatic monomer such as styrene or ethylvinylbenzene. More preferably the adsorbent resin is formed from styrene and divinylbenzene. Levels of the crosslinking monomer are preferably about 25 weight percent or greater, and, where divinylbenzene is used, a preferred embodiment of the present invention uses adsorbent resins having levels of divinylbenzene of about 50 weight percent or greater. In one embodiment of the present invention the adsorbent is a polyvinylpolypyrrolidone or polyamide. The adsorbent resins may, for example, be non-ionic or have low ionic character such that they result in only limited changes in the ionic character of the treated food products.

Suitable carbonaceous adsorbents include partially pyrolyzed materials, for example, having an average surface area of about 100 m²/g or greater, preferably about 250 m²/g or greater. Such materials include activated carbon, such as activated charcoal from wood, bone, coal, lampblack and the like; and the more preferred carbonaceous adsorbents made by partial pyrolysis of macroporous, synthetic copolymers and ion exchange resins in the presence of a carbon fixing moiety, for example, a sulphonic acid group. Suitable monomers from which the synthetic copolymers and ion exchange resins may be made include those listed above as suitable for making the polymeric adsorbent resins. These more preferred carbonaceous adsorbents are typically pyrolyzed at temperatures of from about 300°C to about 900°C, preferably 300°C to 700°C, in a non-oxidising atmosphere, and the most preferred of these adsorbents has a carbon-to-hydrogen ratio of from 1.5:1 to 20:1 and at least 85% by weight of carbon.

Examples of suitable commercially available polymeric adsorbent resins are Amberlite XAD-4, Amberlite XAD-16, Amberlite XAD-7 and Duolite XAD-761, each of which is manufactured by Rohm and Haas Company, Philadelphia, United States of America. Examples of suitable carbonaceous adsorbents include activated carbon and the Ambersorb adsorbents manufactured by Rohm and Haas Company, Philadelphia, United States of America, e.g. Ambersorb 563.

The adsorbent resins, which preferably have a long useful life, may be regenerated, for example, by the use of regenerants normally available in the food industry, e.g. the dairy industry. Suitable regenerants include solvents, elevated temperatures, acidic regenerants, basic regenerants and oxidising regenerants and combinations thereof. Examples of suitable solvents that may be used to regenerate the adsorbent resin include ethanol, methanol, propanol and isopropanol. In one embodiment of the present invention the regenerant comprises regenerant selected from sodium hydroxide, hydrochloric acid, nitric acid, sodium hypochlorite, hydrogen peroxide, peracetic acid, potassium hydroxide, phosphoric acid, steam, and hot water, and preferably comprises regenerant selected from sodium hydroxide, hydrochloric acid, nitric acid, sodium hypochlorite, steam, and hot water. The regeneration of the adsorbent resins may be carried out at elevated temperatures. When regenerated using elevated temperatures, the temperature may, for example, be at least 45°C, preferably at least 90°C, and more preferably at least 120°C. When regenerated using elevated temperatures, the temperature is preferably not more than 180°C.

In the process of the present invention, the food products may, for example, be contacted with the adsorbent resin by passing such product or by-product through a bed of the adsorbent resin. Alternatively, the adsorbent resin may be contacted with the food product by admixing the adsorbent resin with the food product, for example, in a batch contacting system or in a fluidised bed system or in such other mechanical contacting device normally used in the ion exchange industry.

In one embodiment of the process of the present invention, the food products are subjected to filtration, for example, ultrafiltration, microfiltration, hyperfiltration, reverse osmosis and/or centrifugation, e.g. high speed centrifugation or ultracentrifugation, prior to or after, preferably prior to, the treatment with the adsorbent resin.

By practice of the present invention it is possible to improve the quality of food products in one or more of the following respects:-
1. Flavour improvement by removing, or minimising, off-flavours (off-tastes).
2. Colour improvement by removing, or minimising, off-colours.
3. Improvement in odour by removing, or minimising, off-smells.
4. Improvement in purity by removing, or minimising, undesirable contaminants such as residues of agricultural chemicals.
5. Cloud stability improvement especially when the food product treated is the so-called "soya milk".

The following Examples are presented to illustrate certain embodiments of the present invention.

### Examples

### Examples 1 to 8:

A number of milk products from different sources such as cow, goat, sheep, and mare, as whole or skimmed product, were subjected to treatment with an adsorbent resin in accordance with the process of the present invention. A sample of soya milk was also subjected to treatment with an adsorbent in accordance with the process of the present invention.

The products tested were either fresh or had been subjected to heat treatment prior to being treated with the adsorbent resin.

The adsorbent resin used in the Examples was Amberlite XAD-16 and was added to the milk/soya products in an amount of 50g adsorbent resin/litre of milk/soya product. After addition of the adsorbent resin, the resulting mixture was shaken and then filtered to separate the resin from the milk/soya product. The treatment of the milk/soya product with the adsorbent resin was effected at room temperature (approx. 25°C).

The products were evaluated, both prior to and after treatment with the adsorbent resin, by a taste panel composed of eight people. The products were assessed based on the following criteria:-
1. Flavour (taste);
2. Bitterness;
3. Colour;
4. Smell (in the case of milk);
5. Mouth feel (in the case of soya milk); and
6. Cloud stability (in the case of soya milk).

For each of the assessements the product was assessed on a scale of 1 to 5, with 1 being the worst rating (i.e. poorest quality in respect of the particular criterium) and 5 being the best rating (i.e. the best quality in respect of the particular criterium).

The results obtained are summarised below.

### Example 1:

| Whole cow's milk, ca. 3.5% fat, fresh. | | | | |
|---|---|---|---|---|
| | Flavour | Smell | Bitterness | Colour |
| Prior to Treatment: | 1 | 1 | 4 | 2 |
| After Treatment: | 5 | 5 | 4 | 5 |

### Example 2:

| Whole cow's milk, ca 3.5% fat, UHT. | | | | |
|---|---|---|---|---|
| | Flavour | Smell | Bitterness | Colour |
| Prior to Treatment: | 2 | 2 | 1 | 2 |
| After Treatment: | 5 | 5 | 4 | 5 |

### Example 3:

| Whole cow's milk, ca 3.5% fat, pasteurised. | | | | |
|---|---|---|---|---|
| | Flavour | Smell | Bitterness | Colour |
| Prior to Treatment: | 4 | 4 | 3 | 4 |
| After Treatment: | 5 | 5 | 4 | 5 |

### Example 4:

| Whole goat's milk, ca 3% fat, fresh. | | | | |
|---|---|---|---|---|
| | Flavour | Smell | Bitterness | Colour |
| Prior to Treatment: | 1 | 1 | 4 | 2 |
| After Treatment: | 5 | 5 | 4 | 5 |

### Example 5:

| Whole goat's milk, ca 3% fat, UHT. | | | | |
|---|---|---|---|---|
| | Flavour | Smell | Bitterness | Colour |
| Prior to Treatment: | 2 | 2 | 1 | 2 |
| After Treatment: | 5 | 5 | 4 | 5 |

### Example 6:

| Skimmed cow's milk, less than 0.5% fat, UHT. | | | | |
|---|---|---|---|---|
| | Flavour | Smell | Bitterness | Colour |
| Prior to Treatment: | 2 | 2 | 1 | 2 |
| After Treatment: | 5 | 5 | 4 | 5 |

### Example 7:

| Cream from cow's milk, greater than 25% fat, pasteurised. | | | | |
|---|---|---|---|---|
| | Flavour | Smell | Bitterness | Colour |
| Prior to Treatment: | 1 | 1 | 3 | 2 |
| After Treatment: | 5 | 5 | 4 | 4 |

### Example 8:

| Whole soya milk, UHT. | | | | |
|---|---|---|---|---|
| | Flavour | Smell | Bitterness | Colour |
| Prior to Treatment: | 1 | 1 | 3 | 2 |
| After Treatment: | 3 | 3 | 4 | 4 |

| | Mouth feel | | Cloud stability | |
|---|---|---|---|---|
| Prior to Treatment: | 2 | | 1 | |
| After Treatment: | 4 | | 5 | |

### Examples 9 to 11:

The procedure of Examples 1 to 8 was repeated on a number of milk and soya milk products except that the adsorbent resin used was Amberlite XAD-7. The results obtained are summarised below.

### Example 9:

| Whole cow's milk, ca. 3.5% fat, UHT. | | | | |
|---|---|---|---|---|
| | Flavour | Smell | Bitterness | Colour |
| Prior to Treatment: | 2 | 2 | 1 | 2 |
| After Treatment: | 5 | 5 | 4 | 5 |

### Example 10:

| Whole soya milk, Heat treated. | | | | |
|---|---|---|---|---|
| | Flavour | Smell | Bitterness | Colour |
| Prior to Treatment: | 1 | 1 | 3 | 2 |
| After Treatment: | 3 | 3 | 4 | 4 |

| | Mouth Feel | | Cloud Stability | |
|---|---|---|---|---|
| Prior to Treatment: | 2 | | 2 | |
| After Treatment: | 3 | | 5 | |

### Example 11:

| Whole sheep's milk, ca. 3% fat, UHT. | | | | |
|---|---|---|---|---|
| | Flavour | Smell | Bitterness | Colour |
| Prior to Treatment: | 2 | 2 | 2 | 2 |
| After Treatment: | 5 | 5 | 4 | 4 |

### Examples 12 to 14:

The procedure of Examples 1 to 8 was repeated on a number of milk and soya milk products except that the adsorbent resin used was Ambersorb 563. The results obtained are summarised below.

### Example 12:

| Whole cow's milk, ca. 3.5% fat, UHT. | | | | |
|---|---|---|---|---|
| | Flavour | Smell | Bitterness | Colour |
| Prior to Treatment: | 2 | 2 | 1 | 2 |
| After Treatment: | 5 | 5 | 4 | 5 |

### Example 13:

| Whole soya milk, heat treated. | | | | |
|---|---|---|---|---|
| | Flavour | Smell | Bitterness | Colour |
| Prior to Treatment: | 1 | 1 | 3 | 2 |
| After Treatment: | 4 | 4 | 4 | 4 |

| | Mouth Feel | | Cloud Stability | |
|---|---|---|---|---|
| Prior to Treatment: | 2 | | 2 | |
| After Treatment: | 4 | | 4 | |

### Example 14:

| Skimmed cow's milk, <0.5% fat, UHT. | | | | |
|---|---|---|---|---|
| | Flavour | Smell | Bitterness | Colour |
| Prior to Treatment: | 2 | 2 | 1 | 2 |
| After Treatment: | 5 | 5 | 4 | 5 |

As can be seen from the above data, the quality of the products treated is improved by subjecting the products to treatment with the adsorbent resin.

"Amberlite" and "Duolite" are trademarks of Rohm and Haas Company, Philadelphia, United States of America.

## Claims

1. A process for treating a food product which comprises contacting a food product selected from dairy products and soya milk, which has been subjected to treatment to stabilize the product and which has developed off-flavors, off-colours and/or off-smells as a result of said treatment to stabilise the product, with a polymeric adsorbent resin to remove the off-flavors, off-colours and/or off-smells.

2. A process as claimed in claim 1, wherein the treatment to stabilize the product comprises heating the product.

3. A process as claimed in claim 1 or claim 2, wherein the adsorbent resin is a macroporous resin having a surface area of 100 m²/g or greater, preferably 250 m²/g or greater.

4. A process as claimed in any preceding claim, wherein the polymeric adsorbent resin is a crosslinked polymer formed from monomers comprising styrene and divinylbenzene.

5. A process as claimed in any preceding claim, wherein the food product is passed through a bed of the adsorbent resin.

6. A process as claimed in any preceding claim, wherein the food product is subjected to filtration and/or centrifugation before or after, preferably before, contacting the food product with the adsorbent resin.

7. A process as claimed in claim 6, wherein the filtration is ultrafiltration, microfiltration, hyperfiltration, or reverse osmosis, preferably ultrafiltration.

8. A process as claimed in claim 6, wherein the centrifugation is high speed centrifugation or ultracentrifugation.

9. A process as claimed in any preceding claim, wherein, subsequent to contact with the food product, the adsorbent resin is regenerated using solvent, elevated temperature, acidic regenerant, basic regenerant, oxidising regenerant, or a combination thereof.

10. A process as claimed in claim 9, wherein the regenerant comprises regenerant selected from sodium hydroxide, hydrochloric acid, nitric acid, sodium hypochlorite, hydrogen peroxide, peracetic acid, potassium hydroxide, phosphoric acid, steam and hot water, and preferably the regenerant comprises regenerant selected from sodium hydroxide, hydrochloric acid, nitric acid, sodium hypochlorite, steam and hot water.

11. A process as claimed in claim 9 or claim 10, wherein the regenerant comprises solvent selected from ethanol, methanol, propanol and isopropanol.

12. A process as claimed in any of claims 9 to 11, wherein the regeneration is carried out at a temperature of at least 45°C, preferably at least 120°C.

13. A process as claimed in any of claims 9 to 12, where in the regeneration is carried out at a temperature of up to 180°C.

14. A process as claimed in any preceding claim, wherein the food product is a milk product.

15. A process as claimed in any of claims 1 to 13, wherein the food product is soya milk.

16. Use of polymeric adsorbent resin in the treatment of a food product selected from dairy products and soya milk to remove off-flavours, off-colours and/or off-smells which have been developed as a result of the treatment of the food product to stabilise the food product.

## Patentansprüche

1. Verfahren zum Behandeln eines Lebensmittelprodukts, welches das Inkontaktbringen eines Lebensmittelprodukts, ausgewählt aus Molkereiprodukten und Sojamilch, das einer Behandlung zur Stabilisierung des Produkts unterworfen worden ist, und das Beigeschmack, Fehlfarben und/oder Nebengerüche als ein Ergebnis der Behandlung zur Stabilisierung des Produkts entwickelt hat, mit einem polymeren Adsorberharz zur Beseitigung des Beigeschmacks, der Fehlfarben und/oder des Nebengeruchs umfaßt.

2. Verfahren nach Anspruch 1, wobei die Behandlung zur Stabilisierung des Produkts das Erwärmen des Produkts umfaßt.

3. Verfahren nach Anspruch 1 oder 2, wobei das Adsorberharz ein makroporöses Harz mit einer Oberfläche von 100 m²/g oder größer, vorzugsweise 250 m²/g oder größer ist.

4. Verfahren nach einem vorhergehenden Anspruch, wobei das polymere Adsorberharz ein vernetztes Polymer ist, das aus Monomeren gebildet ist, die Styrol und Divinvlbenzol umfassen.

5. Verfahren nach einem vorhergehenden Anspruch, wobei das Lebensmittelprodukt durch ein Bett des Adsorberharzes geleitet wird.

6. Verfahren nach einem vorhergehenden Anspruch, wobei das Lebensmittelprodukt einer Filtration und/oder Zentrifugation vor oder nach, vorzugsweise vor, dem Inkontaktbringen des Lebensmittelprodukts mit dem Adsorberharz unterworfen wird.

7. Verfahren nach Anspruch 6, wobei die Filtration Ultrafiltration, Mikrofiltration, Hyperfiltration oder Umkehrosmose, vorzugsweise Ultrafiltration, ist.

8. Verfahren nach Anspruch 6, wobei die Zentrifugation Hochgeschwindigkeitszentrifugation oder Ultrazentrifugation ist.

9. Verfahren nach einem vorhergehenden Anspruch, wobei nachfolgend dem Inkontaktbringen mit dem Lebensmittelprodukt das Adsorberharz unter Verwendung eines Lösungsmittels, erhöhter Temperatur, sauren Regenerationsmitteln, basischen Regenerationsmitteln, oxidierenden Regenerationsmitteln oder einer Kombination davon regeneriert wird.

10. Verfahren nach Anspruch 9, wobei das Regenerationsmittel Regenerationsmittel umfaßt, ausgewählt aus Natriumhydroxid, Salzsäure, Salpetersäure, Natriumhypochlorit, Wasserstoffperoxid, Peressigsäure, Kaliumhydroxid, Phosphorsäure, Dampf und heißes Wasser, und vorzugsweise das Regenerationsmittel Regenerationsmittel umfaßt, ausgewählt aus Natriumhydroxid, Salzsäure, Salpetersäure, Natriumhypochlorit, Dampf und heißem Wasser.

11. Verfahren nach Anspruch 9 oder 10, wobei das Regenerationsmittel Lösungsmittel, ausgewählt aus Ethanol, Methanol, Propanol und lsopropanol, umfaßt.

12. Verfahren nach einem der Ansprüche 9 bis 11 , wobei die Regeneration bei einer Temperatur von mindestens 45°C, vorzugsweise mindestens 120°C durchgeführt wird.

13. Verfahren nach einem der Ansprüche 9 bis 12, wobei die Regeneration bei einer Temperatur von bis zu 180°C durchgeführt wird.

14. Verfahren nach einem vorhergehenden Anspruch, wobei das Lebensmitte:-produkt ein Milchprodukt ist.

15. Verfahren nach einem der Ansprüche 1 bis 13, wobei das Lebensmittelprodukt Sojamilch ist.

16. Verwendung eines polymeren Adsorberharzes zur Behandlung eines Lebensmittelprodukts, ausgewählt aus Molkereiprodukten und Sojamilch, zur Beseitigung von Beigeschmack, Fehlfarben und/oder Nebengerüchen, welche als ein Ergebnis der Behandlung des Lebensmittelprodukts zur Stabilisierung des Lebensmittelprodukts entwickelt worden sind.

## Revendications

1. Procédé pour traiter un produit alimentaire, qui comprend la mise en contact d'un produit alimentaire choisi parmi les produits laitiers et le lait de soja, qui a été soumis à un traitement pour stabiliser le produit et qui a développé un mauvais goût, des couleurs atypiques et/ou de mauvaises odeurs en conséquence dudit traitement pour stabiliser le produit, avec une résine adsorbante polymère pour éliminer le mauvais goût, les couleurs atypiques et/ou les mauvaises odeurs.

2. Procédé selon la revendication 1, dans lequel le traitement pour stabiliser le produit comprend le chauffage du produit

3. Procédé selon la revendication 1 ou la revendication 2, dans lequel la résine adsorbante est une résine macroporeuse ayant une aire de surface de 100 m²/g ou plus, de préférence 250 m²/g ou plus.

4. Procédé selon l'une quelconque des revendications précédentes, dans lequel la résine adsorbante polymère est un polymère réticulé formé à partir de monomères comprenant le styrène et le divinylbenzène.

5. Procédé selon l'une quelconque des revendications précédentes, dans lequel on fait passer le produit alimentaire à travers un lit de la résine adsorbante.

6. Procédé selon l'une quelconque des revendications précédentes, dans lequel le produit alimentaire est soumis à une filtration et/ou centrifugation avant ou après, de préférence avant, la mise en contact du produit alimentaire avec la résine adsorbante.

7. Procédé selon la revendication 6, dans lequel la filtration est l'ultrafiltration, la microfiltration, l'hyperfiltration ou l'osmose inverse, de préférence l'ultrafiltration.

8. Procédé selon la revendication 6, dans lequel la centrifugation est la centrifugation à haute vitesse ou l'ultracentrifugation.

9. Procédé selon l'une quelconque des revendications précédentes, dans lequel, après le contact avec le produit alimentaire, la résine adsorbante est régénérée en utilisant un solvant, une température élevée, un régénérant acide, un régénérant basique, un régénérant oxydant ou une combinaison de ceux-ci.

10. Procédé selon la revendication 9, dans lequel le régénérant comprend un régénérant choisi parmi l'hydroxyde de sodium, l'acide chlorhydrique, l'acide nitrique, l'hypochlorite de sodium, le peroxyde d'hydrogène, l'acide peracétique, l'hydroxyde de potassium, l'acide phosphorique, la vapeur et l'eau chaude, et le régénérant comprend de préférence un régénérant choisi parmi l'hydroxyde de sodium, l'acide chlorhydrique, l'acide nitrique, l'hypochlorite de sodium, la vapeur et l'eau chaude.

11. Procédé selon la revendication 9 ou la revendication 10, dans lequel le régénérant comprend un solvant choisi parmi l'éthanol, le méthanol, le propanol et l'isopropanol.

12. Procédé selon l'une quelconque des revendications 9 à 11 dans lequel la regénération est effectuée à une température d'au moins 45 °C, de préférence d'au moins 120 °C.

13. Procédé selon l'une quelconque des revendications 9 à 12, dans lequel la régénération est effectuée à une température allant jusqu'à 180°C.

14. Procédé selon l'une quelconque des revendications précédentes, dans lequel le produit alimentaire est un produit laitier.

15. Procédé selon l'une quelconque des revendications 1 à 13, dans lequel le produit alimentaire est le lait de soja.

16. Utilisation d'une résine adsorbante polymère dans le traitement d'un produit alimentaire choisi parmi les produits laitiers et le lait de soja pour éliminer le mauvais goût les couleurs atypiques et/ou les mauvaises odeurs qui se sont développés en conséquence du traitement du produit alimentaire pour stabiliser celui-ci.
